# EUROPÄISCHE PATENTSCHRIFT

(11) **EP 3 253 514 B1**
(45) Veröffentlichungstag und Bekanntmachung des Hinweises auf die Patenterteilung: **06.03.2024**
(21) Anmeldenummer: 16703085.7
(22) Anmeldetag: 29.01.2016
(51) Int. Cl.: B22F 3/11, B22F 3/16, B22F 10/28, B33Y 10/00, B33Y 30/00, B33Y 80/00, B22F 10/37, B22F 12/30

(54) **VERFAHREN UND VORRICHTUNG ZUR ADDITIVEN HERSTELLUNG VON BAUTEILEN, UND DURCH DIESES VERFAHREN HERGESTELLTE BAUTEILE**
METHOD AND DEVICE FOR ADDITIVELY PRODUCING COMPONENTS, AND COMPONENTS PRODUCED THROUGH SAID METHOD
PROCÉDÉ ET DISPOSITIF DE FABRICATION ADDITIVE DE PIÈCES, ET PIÈCES FABRIQUÉES SELON CETTE MÉTHODE

(30) Priorität: 02.02.2015 DE 102015201775
(43) Veröffentlichungstag der Anmeldung: 13.12.2017
(73) Patentinhaber: GKN Sinter Metals Engineering GmbH, 42477 Radevormwald (DE)
(72) Erfinder: SCHMITT, Rainer, 53343 Wachtberg (DE); HÖGES, Simon, 51491 Overath (DE); AYDIN, Ümit, 53343 Wachtberg (DE); KALLEE, Richard, 40882 Ratingen (DE); MÖLGG, Peter, 39031 Bruneck (IT)
(74) Vertreter: Rössler, Matthias
(86) Internationale Anmeldenummer: PCT/EP2016/051958
(87) Internationale Veröffentlichungsnummer: WO 2016/124502

(56) Entgegenhaltungen:
- EP-A1- 2 551 040
- EP-A1- 2 570 595
- WO-A1-2014/095208
- WO-A1-2014/179822
- GB-A- 2 491 472
- US-A1- 2004 012 124
- US-A1- 2006 198 916
- US-A1- 2011 224 796
- US-A1- 2011 286 874
- US-A1- 2014 010 908

## Beschreibung

Die vorliegende Erfindung betrifft ein Verfahren und eine Vorrichtung zur additiven Herstellung eines Körpers sowie einen derart hergestellten Körper selbst. Als additives Verfahren wird vorzugsweise ein Pulverbett-Verfahren genutzt. Additive Manufacturing, auch bekannt als generative Fertigung, Rapid Prototyping, Rapid Manufacturing oder 3D-Druck ist seit den späten 90ger Jahren verstärkter Fokus von Entwicklung und industrieller Umsetzung. Zunächst eingesetzt zur Herstellung von Funktionsmustern und Prototypen sowie Werkzeugen sind seit den 2000ger Jahren auch Anwendungen in der Serienfertigung umgesetzt worden. Beispiele sind insbesondere in der Medizintechnik mit der Fertigung von dentalen Zahnersatzgerüsten, individuellen Knochenersatzimplantaten sowie komplexen Instrumenten zu sehen. Eine frühe Umsetzung für die Serienfertigung wurde auch im Bereich Werkzeugbau insbesondere durch die Herstellung von Spritzgussformen mit integrierten Kühlkanälen erreicht. Kurz vor der Serienreife sind verschiedene Applikationen in der Luftfahrt wie zum Beispiel gewichtsreduzierte Brackets oder Turbinenbestandteile. Alle bisherigen Anwendungen in der Serienfertigung liegen jedoch in hochpreisigen Marktsegmenten, bei denen entweder hohe Materialkosten oder aufwändige Prozessketten zur Herstellung der Bauteile vorliegen.

Bei der Pulverbett-basierten additiven Fertigung wird ein pulverförmiges Material schichtweise aufgetragen und Schicht für Schicht an den Stellen verfestigt, die durch einen CAD-Datensatz des zu fertigenden Bauteils definiert sind. Nach jeder Verfestigung wird die Plattform, auf der das Bauteil aufgebaut wird, um eine Schichtdicke abgesenkt und eine weitere Pulverschicht aufgetragen.

Durch dieses Verfahrensprinzip ist ein Vorteil des Additive Manufacturing direkt ersichtlich: Er liegt in der Geometriefreiheit. So können ohne weiteres Bauteile mit Hinterschnitten, internen Strukturen, Freiformflächen oder Hohlstrukturen gefertigt werden, die konventionell gar nicht oder nur mit erheblichem Aufwand realisierbar wären. Des Weiteren entspricht auf Grund der additiven Fertigung aus Pulvermaterial der tatsächliche Materialbedarf dem Gewicht des finalen Bauteils; nicht geschmolzenes Pulver wird dem Prozess wieder zugeführt. Zusammen mit einem geringen Energiebedarf ist das Verfahren im Vergleich zum Gießen oder Fräsen sehr ressourcenschonend.

Dieses Verfahren ist bisher nicht mit einer erfolgreichen Umsetzung zur Serienfertigung in preissensitiven Massenmärkten wie z. B. Automotive dokumentiert. Weiterhin wird dort Additive Manufacturing ausschließlich zur Prototypen- und Vorserienfertigung eingesetzt. Die Ursache dafür sind hohe Bauteilkosten, die insbesondere in höheren Stückzahlen (> 1.000 Stück/Jahr) nicht wettbewerbsfähig mit konventionellen Verfahren sind. Die Vorteile durch Gewichtseinsparung und funktionellen Mehrwert wiegen dieses Defizit nicht auf. Die Ursache für die hohen Bauteilkosten liegen primär in
- langen Fertigungszeiten und damit hohen Kosten für die Abschreibung der Maschine,
- hohem Aufwand der Oberflächennachbearbeitung bei Funktionsflächen,
- hohen Materialkosten durch aufwändige Herstellung des Rohmaterials (Pulver).

Um eine Umsetzung des Fertigungsverfahrens in den genannten Märkten zu erreichen, müssen diese Defizite reduziert werden. Die vorliegende Erfindung zeigt Lösungsansätze zur Reduzierung der langen Fertigungszeiten und des hohen Aufwands der Oberflächennacharbeit auf.

Ausgangspunkt der Überlegung ist, bei der Auslegung ein Hülle-Kern-Prinzip zu nutzen, wie es beispielsweise aus der DE 10 2007 039 035 B3 schon prinzipiell entnommen werden kann. Es wird ein zu fertigender 3D-Datensatz in einen Hüllbereich und einen Kernbereich unterteilt.

Dabei wird die äußere Hülle mit einer bestimmten Wandstärke differenziert vom Volumenbereich des Bauteils dargestellt. Mit dieser Aufspaltung des Datensatzes können den beiden Bereichen unterschiedliche Verfahrensparameter zugewiesen und damit am Bauteil unterschiedliche Eigenschaften erreicht werden. In DE000004309524C2 wird beschrieben, dass im Volumenbereich höhere Laserleistung und größere Schichtstärken realisiert werden, um die Baumgeschwindigkeit zu erhöhen, im Hüllbereich dahingegen Parameter zur Erzeugung einer geringen Oberflächenrauheit gewählt werden. Die Erhöhung der Aufbaurate ist mit diesem Ansatz jedoch nur eingeschränkt möglich, da weiterhin das Pulver mit dem Laser verfestigt wird.

In DE000019903436C2 und DE102007039035B3 wird der Volumenbereich nicht verfestigt, das Pulver nach dem AM-Prozess aus dem Hohlraum entfernt und der Hohlraum mit einem Metall ausgegossen. In diesem Fall müssen jeweils Öffnungen vorgesehen werden, um das Pulver zu entfernen und das Metall einzugießen. In DE102011089194A1 wird beschrieben, dass der vollständige AM-Prozess mit nanoskaligem Pulver durchgeführt wird, das Pulver im Volumenbereich jedoch nicht verfestigt wird sondern im Hohlraum verbleibt. Anschließend kann dies durch Ofensintern verfestigt werden.

Die Nacharbeit der Oberflächen an einem Bauteil, das mit AM gefertigt wurde, wird in der Literatur vornehmlich durch mechanische, spanende Nacharbeit beschrieben. Dabei sind insbesondere die WO 2013167903 A1 und WO 2013167904 A1 relevant. Fokus der Literatur liegt insbesondere auf der Wahl der Referenzierung des im AM-Verfahren hergestellten Halbzeugs im nachgeschalteten zerspanenden Prozess. Zerspanende Nacharbeit bietet in wirtschaftlicher Betrachtung jedoch nur geringes Potential, die Herstellkosten zu senken. Hier besteht Bedarf an kostengünstigen und hochautomatisierten Nacharbeitsverfahren.

Aus der WO 2014/095208 A1 ist ein Verfahren und eine Vorrichtung zur Herstellung dreidimensionaler Produkte bekannt. Dabei wird ein Pulver schichtweise aufgeschmolzen.

Aus der US 2011/224796 A1 ist ein monolithisches Implantat bekannt. Es wird durch Sintern und Elektronenstrahlschweißen hergestellt.

Aus der US 2004/012124 A1 ist eine Vorrichtung zur schichtweisen Herstellung von Bauteilen bekannt. Dabei wird eine ein Pulver transportierende Leitung über Ultraschall angeregt.

Aus der EP 2 570 595 A1 beschreibt ein Verfahren zum Auftrag einer Diffusionsschicht auf ein schichtweise hergestelltes Bauteil, wobei die Diffusionsschicht nach einer Diffusionsbehandlung des Bauteils zumindest teilweise entfernt wird.

Aus der EP 2 551 040 A1 ist auf ein Verfahren zur Herstellung von Bauteilen mit hoher Genauigkeit gerichtet.

Aus der WO 2014/179822 A1 ist ein Verfahren zur Herstellung eines Formkörpers aus einem metallischem Durchdringungsverbundwerkstoff bekannt.

Aus der GB 2491472 A ist ein Verfahren zur Herstellung eines 3D-Produkts durch einen AM-Prozess bekannt.

Aus der US 2014/0010908 A1 ist ein Verfahren zur Herstellung eines 3D-Objekts bekannt.

Aus der US 2006/198916 A1 ist ein Verfahren zur Herstellung eines keramischen 3D-Produkts durch einen AM-Prozess bekannt.

Aufgabe der vorliegenden Erfindung ist es, eine Produktivität eines additiven Herstellungsverfahrens zu steigern.

Diese Aufgabe wird mit einem Verfahren mit den Merkmalen des Anspruchs 1, mit einer Herstellungsanlage mit den Merkmalen des Anspruchs 11, einem Körper mit den Merkmalen des Anspruchs 15 oder 16 und mit einem Computerprogrammprodukt mit den Merkmalen des Anspruchs 19 gelöst. Vorteilhafte Ausgestaltungen und Weiterbildungen gehen aus den nachfolgenden Unteransprüchen wie auch aus der nachfolgenden Beschreibung und den Figuren hervor. Die unabhängigen Ansprüche stellen einen ersten vorläufigen Versuch dar, den Erfindungsgegenstand zu formulieren. Die jeweiligen Merkmale der unabhängigen Ansprüche können jedoch ergänzt, gestrichen oder auch durch ein oder mehrere andere Merkmale der Offenbarung ersetzt werden.

Es wird ein Verfahren zur Herstellung eines Körpers mittels eines additiven Herstellungsverfahrens (AM) unter Nutzung von metallischem Pulver mit den folgenden Schritten vorgeschlagen:
- computersimulierte Auslegung des Körpers unter Berücksichtigung von zumindest einem zu bearbeitenden Bereich des Körpers und Übergabe von Daten an eine additive Herstellungsvorrichtung,
   wobei ein zu fertigender 3D-Datensatz in einen Hüllbereich und einen Kernbereich unterteilt wird,
- sukzessives Bereitstellen des metallischen Pulvers zum Aufbau von aufeinander angeordneten Pulverschichten,
- sukzessives Verhärten von Teilen der Pulverschichten zu zumindest einer vorgegebenen Struktur in den aufeinander angeordneten Pulverschichten, wobei die Struktur zumindest zum Teil mit metallischem Pulver der Pulverschichten gefüllt ist, und
- Kalibrieren eines Körpers, der mittels der Struktur geschaffen wird,
in dem zu bearbeitenden Bereich, wobei andere äußere Bereiche des Körpers unbehandelt bleiben; wobei durch den Prozess des additiven Herstellungsverfahrens vom Kern unterschiedliche mechanische Eigenschaften in dem Randbereich eingebracht werden, der anschließend beim Kalibrieren nachgearbeitet wird, wobei diese Änderung der mechanischen Eigenschaften eine geringere Dichte im Randbereich umfasst.

Die computersimulierte Auslegung des Körpers erlaubt, der additiven Herstellungsweise mit Aufbringung von Pulverschichten übereinander dadurch gerecht zu werden, dass Strukturen geschaffen werden können, die andere Herstellungsverfahren so nicht ermöglichen. Auch kann an die zu schaffende Struktur angepasst das zu verwendende Material entsprechend angeordnet werden. So besteht die Möglichkeit in einer ersten Ausgestaltung, nur ein einziges Material zu nutzen, aus dem die Struktur und der aus der Struktur gewonnene Körper geschaffen werden. Eine zweite Ausgestaltung sieht hingegen vor, dass innerhalb der Struktur auch unterschiedliche Materialien zur Anwendung gebracht werden können.

Die Oberflächen von mittels AM generierten Bauteilen weisen in Abhängigkeit der Verfahrensparameter und des verwendeten Werkstoffs eine Oberflächenrauheit zwischen Ra = 5 - 10 µm [Mikrometer] auf. Dies erfordert beim Einsatz der Bauteile in einer Baugruppe meist eine mechanische Nacharbeit zumindest eines Teils der Oberflächen um notwendige Bauteiltoleranzen einhalten zu können. Um das in der Pulvermetallurgie eingesetzte Verfahren "Kalibrieren" zu verwenden, muss der AM-Prozess dahingehend angepasst werden, dass ähnlich dem oben beschriebenen Hülle/Kern-Verfahren durch den AM-Prozess vom Kern unterschiedliche mechanische Eigenschaften in dem Randbereich eingebracht werden, der anschließend beim Kalibrieren nachgearbeitet wird. Diese Änderung der mechanischen Eigenschaften kann durch eine geringere Dichte, unterschiedliche Mikrostruktur (z. B. Korngröße) oder konstruktiv (im Bauteildesign) eingebracht (bionische) Struktur erreicht werden.

Es hat sich des Weiteren bei der Fertigung als positiv herausgestellt, dass die Struktur in einem inneren Bereich eine zumindest annähernd vollständige Verdichtung erfährt, hingegen ein Außenbereich der Struktur weiterhin eine gewisse Porosität behält. Das erlaubt beispielsweise die Bearbeitungszeiten des additiven Herstellverfahrens zu beschleunigen. So kann zum Beispiel eine Wand der Struktur in ihrem äußeren Bereich eine Dichte zwischen 90 % und 98 % der vollständigen Dichte aufweisen, während ein innerer Bereich der Wand eine vollständige Dichte hat. So kann dann im Anschluss durch das sehr viel schneller ablaufende Kalibrieren derjenige Bereich der Struktur bzw. des so gewonnenen Körpers behandelt werden, der eine derartige Anpassung benötigt. Andere äußere Bereiche des Körpers bleiben sodann jedoch weiter unbehandelt und können zum Beispiel aufgrund ihrer Porosität funktional genutzt werden.

Eine Weiterbildung des Verfahrens sieht vor, dass das Pulver während des additiven Herstellungsverfahrens mehrmals verdichtet wird. Eine derartige Verdichtung hat Vorteile, da dadurch eine höhere Dichte schneller erreicht werden kann, wenn denn die Laserbeaufschlagung erfolgt. Die Verdichtung kann hierbei zu unterschiedlichen Zeiten und/oder durch unterschiedliche Mittel erfolgen. Das Verdichten kann zum Beispiel auch durch gleichzeitige Anwendung von verschiedenen physikalischen Mittel erfolgen: Zum Beispiel durch Druckaufbringung und/oder durch Aufbringung von Vibrationen und/oder durch mechanisches Rechen oder Harken des Pulvers.

Beispielsweise besteht die Möglichkeit, dass das Pulver einzelner Pulverschichten mechanisch verdichtet wird.

Bei AM-Prozessen wird eine dünne Pulverschicht (30 - 200 µm [Mikrometer]) durch verschieden ausgeprägte Mechanismen beginnend auf einer Substratplatte aufgetragen. Diese Pulverschicht wird in der Regel durch die Schwerkraft mit der Schüttdichte des Pulvers erzeugt und durch eine Schiebevorrichtung geebnet. Zur Verbesserung des AM-Prozessergebnisses in Hinsicht auf eine erreichbare hohe Dichte ist eine Verdichtung des Pulvers vorteilhaft. Insbesondere für den oben beschriebenen Prozess ist die Dichte des gesinterten Pulvers abhängig von der im AM-Prozess erzeugten Dichte einer Pulverschicht. Mit einer Kompaktierung der Pulverschicht während des Pulverauftrags kann direkt eine höhere Dichte nach dem Versintern und damit eine höhere Festigkeit des generierten und gesinterten Bauteils erreicht werden.

Bevorzugt ist es, wenn das Pulver zur Verdichtung gerüttelt wird.

In US2012164322A1 wird das Kompaktieren mit einer rotierenden Walze beschrieben. Mit diesem Ansatz ist eine Erhöhung der Schüttdichte des Pulvers möglich. Auch ein anguliertes Blech, wie in DE 10 2010 008 781 A1 beschrieben, lässt keine signifikante Erhöhung der Dichte des Pulverbetts zu. Für den AM-Prozess könnte sich eine stärkere Verdichtung unter Aufbringung einer Presskraft auf die Pulverschicht positiv auswirken. Darüber hinaus kann dadurch die Dichte der durch Ofensintern (s. Sintern) erzeugten Struktur signifikant erhöht werden, ohne einen Materialschrumpf und damit eine Verformung der Hülle herbeizuführen.

Gemäß einem weiteren Gedanken der Erfindung, der mit einem oder mehreren der weiteren obigen wie auch nachfolgenden Ausführungen verbunden ist, sieht ein Verfahren zum Herstellen eines Körpers mittels eines additiven Herstellungsverfahrens (AM) unter Nutzung von metallischem Pulver mit den folgenden Schritten vor:
- sukzessives Bereitstellen des metallischen Pulvers zum Aufbau von aufeinander angeordneten Pulverschichten,
- Anregung des metallischen Pulvers mittels Vibrationen, vorzugsweise Ultraschall, vorzugsweise von ein oder mehreren Pulverschichten mittels dieser Vibrationen, insbesondere Ultraschall,
- sukzessives Verhärten von Teilen der Pulverschichten zu zumindest einer vorgegebenen Struktur in den aufeinander angeordneten Pulverschichten, wobei vorzugsweise die Struktur zumindest zum Teil mit metallischem Pulver der Pulverschichten gefüllt ist. Sie kann aber auch nicht gefüllt sein.

Das Verfahren kann, muss aber nicht, eine Berücksichtigung eines zu bearbeitenden Bereichs vorsehen. Durch die Beaufschlagung mittels Ultraschall kann zum einen eine Verdichtung und insbesondere eine verbesserte Oberflächenbeschaffenheit der Pulverschicht erzielt werden. Zum anderen kann aber auch ein Fließverhalten des Pulvers beeinflusst werden, insbesondere entlang einer Leitung, durch die das Pulver geführt wird.

Es hat sich herausgestellt, dass durch die Nutzung von Vibrationen, insbesondere durch die Nutzung von Vibrationen im Ultraschallbereich, eine Verwendung von Pulvern ermöglicht wird, die bisher nicht beim additiven Pulverbett-Verfahren eingesetzt werden konnten. Bisher war es notwendig, dass an die zu verwendenden Pulver eine hohe Anforderung hinsichtlich einer Rundheit von deren verwendeten Pulverpartikeln erfüllt sein musste. Unter dem Einfluss der Vibration, insbesondere des Ultraschalls, gelingt es jedoch, nunmehr auch Pulverpartikel zu verarbeiten, die nicht-runde Geometrien aufweisen. Insbesondere können nunmehr auch spratzige Pulver verwendet werden, wie sie üblicherweise in der Pulvermetallurgie zum Einsatz kommen.

Beispielsweise ist vorgesehen, dass eine Basisplatte einer Herstellungsanlage des additiven Herstellungsverfahrens, eine Pulverbettschicht und/oder ein Teil einer Vorrichtung zur Zuführung von Pulver zum Pulverauftrag der Herstellungsanlage mittels Vibrationen, vorzugsweise im Ultraschallbereich, angeregt wird.

Eine weitere Ausgestaltung der Verfahren sieht vor, dass das Verhärten von Teilen der Pulverschichten zu einer geschlossenen Struktur führt, in der das Pulver enthalten bleibt.

Des Weiteren kann vorgesehen sein, dass der Körper mittels der vorgeschlagenen Verfahren eine Wandstruktur erhält, die in einem inneren Bereich der Wandstruktur eine geringere Porosität aufweist als ein Außenbereich der Wandstruktur, wobei vorzugsweise der innere Bereich eine zumindest annähernd 100%ige Dichte erhält und der Außenbereich der Wandstruktur porös bleibt.

Es wird im Rahmen der vorgeschlagenen Verfahren ermöglicht, dass in einem Bereich der Wandstruktur ein Pulverparameter und/oder eine Materialeigenschaft bei ansonsten gleichem Pulver anders als in einem Inneren der Wandstruktur eingestellt werden.

Eine weitere Ausgestaltung sieht vor, dass ein zusätzlicher Fertigungsschritt genutzt wird: Das Sintern. Beispielsweise kann vorgesehen sein, dass ein Sintern der zumindest einen Struktur und des Pulvers aus den Pulverschichten, welches in der Struktur beim Sintern beibehalten wird, zum Körper in einem Sinterofen erfolgt, wobei das in der Struktur verbliebene Pulver benachbart zum zu bearbeitenden Bereich des Körpers beim Sintern auf eine Temperatur erhitzt wird, bei der sich Sinterhälse an Pulverkörnern des Pulvers ausbilden, die den zu bearbeitenden Bereich des Körpers abstützen.

Hierbei kann eine Vorgehensweise beispielsweise wie folgt aussehen, wobei die einzelnen Vorgehensweisen hinsichtlich der computersimulierten Auslegung so auch bei Verfahren gemäß der Erfindung einsetzbar sind, die keinen weiteren Sinterschritt vorsehen:
Der zu fertigende Datensatz wird vor der Vorbereitung für den Fertigungsprozess in eine Hülle und einen Kern aufgeteilt. Die Hülle wird mit Fertigungsparametern versehen, damit dort durch den Fertigungsprozess das Pulver verfestigt wird. Der Kern wird entweder vollständig ohne eine Verfestigung um AM-Prozess belassen oder mit einer stabilisierenden Gitterstruktur versehen. Die (bionische) Gitterstruktur dient der Stabilisierung des gesamten Bauteils sowie einer Prozessstabilisierung durch das Abstützen von Überhängen. Während des Prozesses werden nur die vollständig umschließende Hülle sowie eventuell vorhandene stabilisierende Strukturen verfestigt. In den so erzeugten Hohlräumen verbleibt das Ausgangsmaterial (Pulver) in der Dichte, wie es während der Schichterzeugung aufgetragen wurde. Es wird von der Hülle vollständig, oder mit einem Gasauslassloch versehen, umschlossen. Anschließend an den Fertigungsprozess mit AM wird das gefertigte Bauteil bestehend aus verfestigter Hülle und darin enthaltenem Pulver der Maschine entnommen. Das Bauteil wird mit geeigneten Sinterparametern anschließend im Ofen gesintert. Dabei bilden sich zwischen den einzelnen Pulverpartikeln, die nicht verfestigt wurden, Sinterhälse aus, die zu einer Verfestigung des Bauteils führen.

Bei AM-Prozessen wird eine dünne Pulverschicht (30 - 200 µm) durch verschieden ausgeprägte Mechanismen beginnend auf einer Substratplatte aufgetragen. Diese Pulverschicht wird in der Regel durch die Schwerkraft mit der Schüttdichte des Pulvers erzeugt und durch eine Schiebevorrichtung geebnet. Zur Verbesserung des AM-Prozessergebnisses in Hinsicht auf eine erreichbare hohe Dichte ist eine Verdichtung des Pulvers vorteilhaft. Insbesondere für den oben beschriebenen Prozess ist die Dichte des gesinterten Pulvers abhängig von der im AM-Prozess erzeugten Dichte einer Pulverschicht. Mit einer Kompaktierung der Pulverschicht während des Pulverauftrags kann direkt eine höhere Dichte nach dem Versintern und damit eine höhere Festigkeit des generierten und gesinterten Bauteils erreicht werden.

Gemäß einem weiteren Gedanken der Erfindung, der unabhängig wie auch abhängig von dem obigen Gedanken weiterverfolgt werden kann, wird eine Herstellungsanlage zur Durchführung eines Verfahrens wie oben beschrieben vorgeschlagen, aufweisend zumindest eine additive Pulverbett-Herstellungsvorrichtung mit einer Kalibrierungsvorrichtung. Es können hierbei auch mehrere Kalibriervorrichtungen zum Einsatz kommen anstatt nur einer. Die Herstellungsanlage kann weiterhin eine Vibrationsvorrichtung aufweisen.

Bei einer Vibrationseinrichtung, bevorzugt einer Ultraschallvibrationseinrichtung, wird zum Beispiel über einen Generator eine Netzspannung ins

Hochfrequente übertragen. Mittels eines Konverters kann diese Hochfrequenz sodann zum Beispiel mittels eines piezoelektrischen oder magnetorestriktiven Anregers in Ultraschallschwingungen umgesetzt werden. Diese wiederum können genutzt werden, eine Leitung, eine Zuführung, die Basisplatte, die Pulverschichten oder einen sonstigen Bereich der Anlage anzuregen. Dadurch können Schwingungen sich auf das Pulver übertragen lassen, wodurch ein Reibungswiderstand in der Leitung wie auch eine Verstopfungsneigung verringert werden. Auch kann mittels dieser Anregung der Pulverdurchsatz erhöht bzw. die Nutzung auch von nichtkugeligen Pulvern ermöglicht werden.

Weiterhin kann die Herstellungsanlage zusätzlich einen Sinterofen aufweisen. Dadurch kann das Material zusätzlich an Festigkeit und Dichte gewinnen; sollte das zum Beispiel für einen späteren Einsatz des Körpers notwendig sein.

Bevorzugt wird im Falle des Sinterns eine Herstellungsanlage genutzt, bei der der Sinterofen ein Durchlaufofen ist, der Bestandteil einer Fertigungsstraße ist, durch den parallel zu dem mittels additivem Herstellungsverfahren gefertigte Körper anders gefertigte und zu sinternde Körper durchlaufen. Auf diese Weise kann zum Beispiel das vorgeschlagene Verfahren in eine schon bestehende Infrastruktur an schon bestehenden Fertigungsstationen integriert werden und zusätzliche Investitionen bleiben überschaubarer.

Weiterhin kann vorgesehen sein, dass eine Vibrationsvorrichtung, vorzugsweise eine Ultraschallvorrichtung an einer Basisplatte einer Herstellungsanlage des additiven Herstellungsverfahrens, insbesondere des Pulverbettverfahrens, und/oder an einem Teil einer Vorrichtung der Herstellungsanlage zur Zuführung von Pulver zum Pulverauftrag angeordnet ist. Mittels der Vibrationseinrichtung wird das Pulver zu kleinen Bewegungen untereinander angeregt, so dass es besser fließen bzw. sich verdichten kann.

Gemäß einem weiteren Gedanken der Erfindung, welcher nicht von den Ansprüchen gestützt wird, der unabhängig wie auch in Abhängigkeit von den anderen Gedanken vorgesehen werden kann, wird ein Grünkörper zur Herstellung eines Produkts vorgeschlagen, insbesondere eines metallischen Produkts und/oder Sinterkörpers, wobei der Grünkörper mittels eines additiven Herstellungsverfahrens nach einem der vorgeschlagenen Schritte hergestellt wird, wobei der Grünkörper eine Wandstruktur aufweist, die einen inneren Bereich aufweist, der eine geringere Porosität aufweist, vorzugsweise dicht ist, während ein äußerer Bereich der Wandstruktur porös ist. Vorzugsweise erhält der Grünling während des additiven Herstellens eine derart ausreichende Festigkeit, dass ein Sinterschritt nicht benötigt wird.

Wiederum ein weiterer Gedanke der Erfindung, der unabhängig wie auch in Abhängigkeit von den anderen Gedanken vorgesehen werden kann, sieht vor, dass ein metallischer Körper, hergestellt mittels eines der oben beschriebenen additiven Herstellungsverfahren, aufweisend eine äußere Struktur und einen Kern aus jeweils metallischem Material, wobei die äußere Struktur in einem Teilbereich kalibriert ist, der von dem Kern abgestützt ist, wobei der Kern zumindest in einem Bereich der Abstützung des Teilbereichs der Struktur ein metallisches Material aufweist, das Sinterhälse aufweist, wobei die äußere Struktur eine höhere Dichte aufweist als der Kern.

Gemäß einer weiteren Ausgestaltung der Erfindung, die unabhängig wie auch in Abhängigkeit von den anderen Gedanken vorgesehen werden kann, wird ein metallischer Körper, hergestellt mittels eines der oben beschriebenen additiven Herstellungsverfahren, vorgeschlagen, aufweisend eine additiv hergestellte Hohlstruktur aus metallischem Material, wobei die Hohlstruktur entlang eines inneren Bereichs eines Wandquerschnitts der Hohlstruktur eine zumindest annähernd 100%ige Dichte aufweist, während ein äußerer Bereich dieses Wandquerschnitts eine Dichte aufweist, die geringer ist als die des inneren Bereichs. Bevorzugt ist vorgesehen, dass der metallische Körper einen äußeren Bereich der Hohlstruktur aufweist, die in einem Teilbereich kalibriert ist.

Weiterhin ist vorgesehen, dass direkt nach Erstellung aus einer additiven Pulverbett-Herstellungsvorrichtung eine obere und/oder untere Fläche einen geringeren Rauheitswert Sa nach EN ISO 25178 aufweist als eine Seitenfläche des metallischen Körpers und/oder eine Toleranzabweichung eines Abmaß von unten nach oben am metallischen Körper geringer ist als eine Toleranzabweichung eines Abmaß über eine Breite des metallischen Körpers. Dieses wird zum Beispiel durch ein Verdichten der Pulverschichten erzielt, da dadurch beim selektiven Aufschmelzen des Pulvers sich zum Beispiel eine bessere Energieverteilung ergibt, da die Pulverpartikel enger aneinander gepackt sind als ohne Vibration. Dadurch kann aber auch eine Oberflächenrauheit wie auch eine Maßhaltigkeit verbessert werden.

Des Weiteren wird ein Computerprogrammprodukt zur Ausführung auf einem Computer, aufweisend ein Berechnungsverfahren zur Erstellung eines Körpers, wobei mittels des Computerprogrammprodukts die oben beschriebenen Verfahren, mittels den oben beschriebenen Herstellungsanlagen ausgeführt werden.

Die nachfolgenden Figuren zeigen nur beispielhaft eine jeweilige Ausführung der Erfindung, ohne dass damit die Erfindung beschränkt werden soll. Ein oder mehrere Merkmale aus den jeweiligen Figuren können jeweils miteinander aber auch mit Merkmalen aus der nachfolgenden Figuren-Beschreibung wie auch aus der obigen allgemeinen Beschreibung zu weiteren Ausgestaltungen der Erfindung verknüpft werden. Es zeigen:
- Fig. 1:: Eine erste schematische Darstellung von einer Materialschicht, die zur Bildung eines Hülle-Kern-Systems bei dem vorgeschlagenen additiven Herstellungsverfahren genutzt wird, und
- Fig. 2:: Eine zweite schematische Darstellung von einer geschaffenen Struktur, die einen Körper bildet, wobei ein äußerer Bereich einer Wandung des Körpers kalibriert wird.
- Fig. 3:: In schematischer, beispielhafter Weise eine Herstellungsanlage, die ein Pulverbett-Verfahren nutzt.

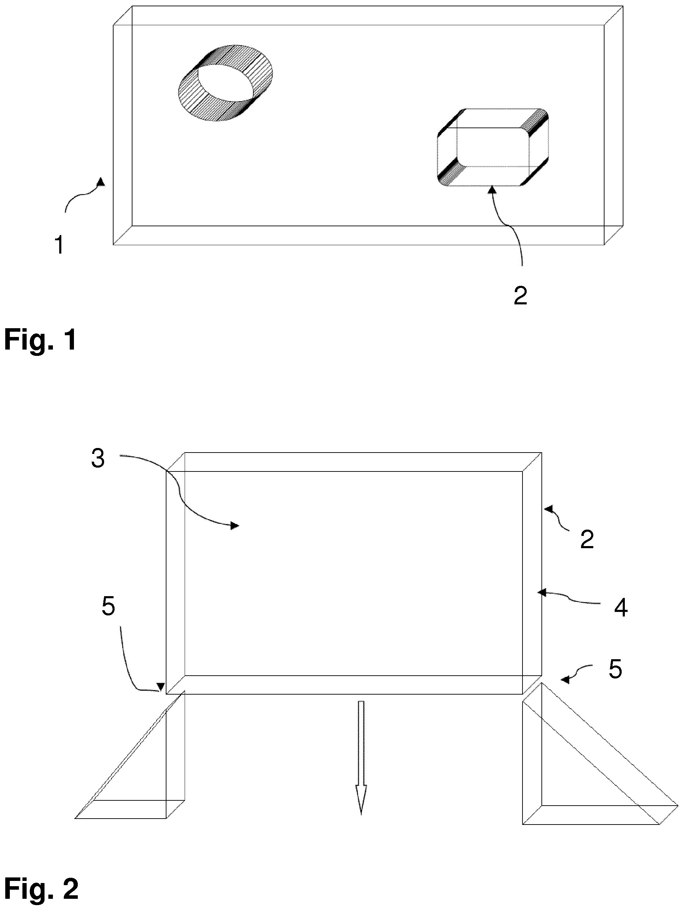

Fig. 1 zeigt in einer schematischen Ansicht eine mit dem vorgeschlagenen additiven Herstellungsverfahren abgelegte übereinander gelagerte Ansammlung von Materialschichten 1, in die Strukturen 2 eingeformt sind entsprechend eines Kern-Hülle-Systems wie oben beschrieben. Eine Verdichtung der Materialschichten 1 vor dem eigentlichen Laserbearbeiten erlaubt, einerseits mit besseren Genauigkeiten arbeiten zu können. Zum anderen kann die Oberflächenbeschaffenheit verbessert werden, da die Pulverpartikel enger aneinander liegend geschmolzen werden, was zu einer besseren Raumfüllung und Vergleichmäßigung des Verteilung des geschmolzenen Materials führt.

Fig. 2 zeigt in schematischer Ansicht eine zweite schematische Darstellung von einer geschaffenen Struktur 2, die einen Körper 3 bildet, wobei ein äußerer Bereich einer Wandung 4 des Körpers 3 kalibriert wird. Angedeutet ist, dass zwei Seiten 5 kalibriert werden, während andere Bereiche nicht weiter verdichtet werden und daher ihre Porosität behalten.

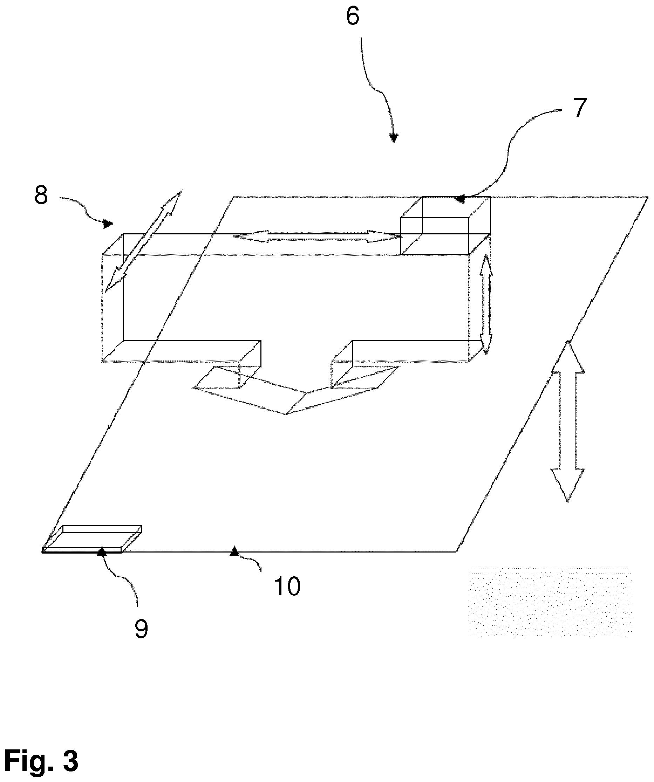

Fig. 3 zeigt in schematischer, vereinfachter Weise eine Herstellungsanlage 6, die ein Pulverbettverfahren nutzt. Hierbei ist als Vibrationsvorrichtung ein erster Ultraschallgeber 7 an einer verfahrbaren Pulverauftragseinrichtung 8 angeordnet. Zumindest ein zweiter Ultraschallgeber 9 ist wiederum an einer höhenverfahrbaren Basisplatte 10 der Herstellungsanlage 6 angeordnet. Mittels des jeweiligen Ultraschallgebers kann das Pulver auf dem Weg durch Leitungen mittels Vibrationen angeregt werden, um dadurch die Fließgeschwindigkeit zu erhöhen, aber auch die Fließfähigkeit des Pulvers zumindest zu erhalten. Durch Vibrationen an der Basisplatte kann das Pulver, entweder schon abgelegt und/oder während der Ablage auf die Basisplatte bzw. auf eine schon abgelegte Pulverschicht, besser verdichtet werden. Das Aufprägen der Vibration kann gleichmäßig und konstant erfolgen, auch kann die Vibration ungleichmäßig sein. Es besteht auch die Möglichkeit, die Aufprägung von Vibrationen zu steuern bzw. zu regeln. Je nach zu verwendendem Pulver bzw. Pulvergemisch können ein oder mehrere Parameter sich verändern, zum Beispiel die Frequenz, die eingebrachte Energie, die zeitliche Dauer der Vibration.

## Patentansprüche

1. Verfahren zur Herstellung eines Körpers mittels eines additiven Herstellungsverfahrens unter Nutzung von metallischem Pulver mit den folgenden Schritten:
- computersimulierte Auslegung des Körpers unter Berücksichtigung von zumindest einem zu bearbeitenden Bereich des Körpers und Übergabe von Daten an eine additive Herstellungsvorrichtung, wobei ein zu fertigender 3D-Datensatz in einen Hüllbereich und einen Kernbereich unterteilt wird
- sukzessives Bereitstellen des metallischen Pulvers zum Aufbau von aufeinander angeordneten Pulverschichten,
- sukzessives Verhärten von Teilen der Pulverschichten zu zumindest einer vorgegebenen Struktur in den aufeinander angeordneten Pulverschichten, wobei die Struktur zumindest zum Teil mit metallischem Pulver der Pulverschichten gefüllt ist, und
- Kalibrieren eines Körpers, der mittels der Struktur geschaffen wird, in dem zu bearbeitenden Bereich, wobei andere äußere Bereiche des Körpers unbehandelt bleiben;
wobei durch den Prozess des additiven Herstellungsverfahrens vom Kern unterschiedliche mechanische Eigenschaften in dem Randbereich eingebracht werden, der anschließend beim Kalibrieren nachgearbeitet wird, wobei diese Änderung der mechanischen Eigenschaften eine geringere Dichte im Randbereich umfasst.

2. Verfahren nach Anspruch 1, **dadurch gekennzeichnet, dass** das Pulver während des additiven Herstellungsverfahrens mehrmals verdichtet wird.

3. Verfahren nach Anspruch 1 oder 2, **dadurch gekennzeichnet, dass** das Pulver einzelner Pulverschichten mechanisch verdichtet wird.

4. Verfahren nach einem der vorhergehenden Ansprüche, **dadurch gekennzeichnet, dass** das Pulver zur Verdichtung gerüttelt wird.

5. Verfahren nach einem der vorhergehenden Ansprüche zum Herstellen eines Körpers mittels eines additiven Herstellungsverfahrens unter Nutzung von metallischem Pulver mit den folgenden Schritten:
- sukzessives Bereitstellen des metallischen Pulvers zum Aufbau von aufeinander angeordneten Pulverschichten,
- Anregung des metallischen Pulvers mittels Vibration,
- sukzessives Verhärten von Teilen der Pulverschichten zu zumindest einer vorgegebenen Struktur in den aufeinander angeordneten Pulverschichten.

6. Verfahren nach einem der vorhergehenden Ansprüche 1 bis 5, **dadurch gekennzeichnet, dass** eine Basisplatte einer Herstellungsanlage des additiven Herstellungsverfahrens, eine Pulverschicht und/oder ein Teil einer Vorrichtung zur Zuführung von Pulver zum Pulverauftrag der Herstellungsanlage mittels Vibrationen angeregt wird.

7. Verfahren nach einem der vorhergehenden Ansprüche 1 bis 6, **dadurch gekennzeichnet, dass** das Verhärten von Teilen der Pulverschichten zu einer geschlossenen Struktur führt, in der das Pulver enthalten bleibt.

8. Verfahren nach einem der vorhergehenden Ansprüche 1 bis 7, **dadurch gekennzeichnet, dass** der Körper eine Wandstruktur erhält, die in einem inneren Bereich der Wandstruktur eine geringere Porosität aufweist als ein Außenbereich der Wandstruktur.

9. Verfahren nach einem der vorhergehenden Ansprüche 1 bis 8, **dadurch gekennzeichnet, dass** in einem Bereich der Wandstruktur ein Pulverparameter und/oder eine Materialeigenschaft bei ansonsten gleichem Pulver anders als in einem Inneren der Wandstruktur eingestellt werden.

10. Verfahren nach einem der vorhergehenden Ansprüche 1 bis 9, **dadurch gekennzeichnet, dass** ein Sintern der zumindest einen Struktur und des Pulvers aus den Pulverschichten, welches in der Struktur beim Sintern beibehalten wird, zum Körper in einem Sinterofen erfolgt, wobei das in der Struktur verbliebene Pulver benachbart zum zu bearbeitenden Bereich des Körpers beim Sintern auf eine Temperatur erhitzt wird, bei der sich Sinterhälse an Pulverkörnern des Pulvers ausbilden, die den zu bearbeitenden Bereich des Körpers abstützen.

11. Herstellungsanlage, aufweisend zumindest eine additive Pulverbett-Herstellungsvorrichtung mit einer Kalibrierungsvorrichtung sowie einen Computer, auf dem ein Computerprogrammprodukt ausführbar ist, durch das ein Verfahren nach einem der Ansprüche 1 bis 10 mittels der Herstellungsanlage ausführbar ist.

12. Herstellungsanlage nach Anspruch 11, **dadurch gekennzeichnet, dass** diese zusätzlich einen Sinterofen aufweist.

13. Herstellungsanlage nach Anspruch 12, **dadurch gekennzeichnet, dass** der Sinterofen ein Durchlaufofen ist, der Bestandteil einer Fertigungsstraße ist, durch den parallel zu dem mittels additivem Herstellungsverfahren gefertigte Körper anders gefertigte und zu sinternde Körper durchlaufen.

14. Herstellungsanlage nach einem der vorhergehenden Ansprüche, **dadurch gekennzeichnet, dass** eine Vibrationseinrichtung an einer Basisplatte einer Herstellungsanlage des additiven Herstellungsverfahrens und/oder an einem Teil einer Vorrichtung der Herstellungsanlage zur Zuführung von Pulver zum Pulverauftrag angeordnet ist.

15. Metallischer Körper, hergestellt mittels eines additiven Herstellungsverfahrens nach einem der vorhergehenden Ansprüche 1 bis 10, aufweisend eine äußere Struktur und einen Kern aus jeweils metallischem Material, wobei die äußere Struktur in einem Teilbereich kalibriert ist, der von dem Kern abgestützt ist, wobei der Kern zumindest in einem Bereich der Abstützung des Teilbereichs der Struktur ein metallisches Material aufweist, das Sinterhälse aufweist, wobei die äußere Struktur eine höhere Dichte aufweist als der Kern.

16. Metallischer Körper, hergestellt mittels eines additiven Herstellungsverfahrens nach einem der vorhergehenden Ansprüche 1 bis 10, aufweisend eine additiv hergestellte Hohlstruktur aus metallischem Material, wobei die Hohlstruktur entlang eines inneren Bereichs eines Wandquerschnitts der Hohlstruktur eine zumindest annähernd 100%ige Dichte aufweist, während ein äußerer Bereich dieses Wandquerschnitts eine Dichte aufweist, die geringer ist als die des inneren Bereichs.

17. Metallischer Körper nach Anspruch 16, **dadurch gekennzeichnet, dass** der äußere Bereich der Hohlstruktur in einem Teilbereich kalibriert ist.

18. Metallischer Körper nach Anspruch 15, 16 oder 17, **dadurch gekennzeichnet, dass** direkt nach Erstellung aus einer additiven Pulverbett-Herstellungsvorrichtung eine obere und/oder untere Fläche einen geringeren Rauheitswert Sa nach EN ISO 25178 aufweist, als eine Seitenfläche des metallischen Körpers und/oder eine Toleranzabweichung eines Abmaß von unten nach oben am metallischen Körper geringer ist, als eine Toleranzabweichung eines Abmaß über eine Breite des metallischen Körpers.

19. Computerprogrammprodukt zur Ausführung auf einem Computer, aufweisend ein Berechnungsverfahren zur Erstellung eines Körpers, wobei mittels des Computerprogrammprodukts die Verfahren nach einem der vorhergehenden Ansprüche 1 bis 10, mittels der Herstellungsanlage nach einem der vorhergehenden Ansprüche 11 bis 14, ausgeführt werden.

## Claims

1. Method for producing a body by means of an additive manufacturing method by using metallic powder, with the following steps:
- computer-simulated design of the body while taking into account at least one region of the body to be processed and transferring data to an additive manufacturing device, wherein a 3D data set to be produced is divided into a shell region and a core region,
- successive providing of the metallic powder in order to construct powder layers arranged one on the other,
- successive hardening of parts of the powder layers in order to form at least one specified structure in the powder layers arranged one on the other, wherein the structure is at least partly filled with metallic powder of the powder layers, and
- calibrating a body, which is created by means of the structure, in the region to be processed, wherein other outer regions of the body will then remain unprocessed;
wherein the process of the additive manufacturing method introduces mechanical properties in the edge region which are different from the core, wherein the edge region is subsequently reworked during calibration, this change in mechanical properties comprising a lower density in the edge region.

2. Method as claimed in claim 1, **characterized in that** the powder is repeatedly compacted during the additive manufacturing method.

3. Method as claimed in claim 1 or 2, **characterized in that** the powder of individual powder layers is mechanically compacted.

4. Method as claimed in one of the preceding claims, **characterized in that** the powder is shaken for the compacting.

5. Method as claimed in one of the preceding claims, for producing a body by means of an additive manufacturing (AM) method by using metallic powder, with the following steps:
- successive providing of the metallic powder in order to construct powder layers arranged one on the other,
- excitation of the metallic powder by means of vibration,
- successive hardening of parts of the powder layers in order to form at least one specified structure in the powder layers arranged one on the other.

6. Method as claimed in one of the preceding claims 1 to 5, **characterized in that** a base plate of a manufacturing layout of the additive manufacturing method, a powder layer, and/or a part of a device for the supplying of powder for the powder deposition of the manufacturing layout is excited by means of vibrations.

7. Method as claimed in one of the preceding claims 1 to 6, **characterized in that** the hardening of parts of the powder layers results in a closed structure in which the powder remains intact.

8. Method as claimed in one of the preceding claims 1 to 7, **characterized in that** the body is given a wall structure which has a lesser porosity in an inner region of the wall structure than an outer region of the wall structure.

9. Method as claimed in one of the preceding claims 1 to 8, **characterized in that** a powder parameter and/or a material property for an otherwise identical powder is adjusted differently in one region of the wall structure than in an interior of the wall structure.

10. Method as claimed in one of the preceding claims 1 to 9, **characterized in that** a sintering of the at least one structure and the powder from the powder layers which is retained in the structure during the sintering occurs in a sintering furnace to form the body, wherein the powder remaining in the structure near the region of the body to be processed is heated during the sintering to a temperature at which sinter necks form on powder grains of the powder and brace the region of the body to be processed.

11. Manufacturing layout, comprising at least one additive powder bed manufacturing device with a calibration device and a computer, on which a computer program product is executable by which a method as claimed in one of claims 1 to 10 can be carried out with the manufacturing layout.

12. Manufacturing layout as claimed in claim 11, **characterized in that** it additionally has a sintering furnace.

13. Manufacturing layout as claimed in claim 12, **characterized in that** the sintering furnace is a continuous furnace, which is part of a manufacturing line through which otherwise fabricated and to be sintered bodies move in parallel with the body fabricated by means of the additive manufacturing method.

14. Manufacturing layout as claimed in one of the preceding claims, **characterized in that** a vibration mechanism is arranged on a base plate of a manufacturing layout of the additive manufacturing method and/or on a part of a device of the manufacturing layout for the supplying of powder for the powder deposition.

15. Metallic body, produced by an additive manufacturing method as claimed in one of the preceding claims 1 to 10, having an outer structure and a core, each of metallic material, wherein the outer structure is calibrated in a partial region, which is braced by the core, wherein the core at least in a region of the bracing of the partial region of the structure comprises a metallic material having sinter necks, wherein the outer structure has a higher density than the core.

16. Metallic body, produced by an additive manufacturing method as claimed in one of the preceding claims 1 to 10, having an additively manufactured hollow structure of metallic material, wherein the hollow structure has an at least approximately 100% density along an inner region of a wall cross section of the hollow structure, while an outer region of this wall cross section has a density which is less than that of the inner region.

17. Metallic body as claimed in claim 16, **characterized in that** the outer region of the hollow structure is calibrated in a partial region.

18. Metallic body as claimed in claim 15, 16 or 17, **characterized in that** directly after being created from an additive powder bed manufacturing device an upper and/or lower surface has a lesser roughness coefficient Sa per EN ISO 25178 than a side surface of the metallic body and/or a tolerance deviation of a dimension, from the bottom upward, on the metallic body is less than a tolerance deviation of a dimension over a width of the metallic body.

19. Computer program product for execution on a computer, having a computational method for creating a body, wherein with the computer program product the methods as claimed in one of the preceding claims 1 to 10 are carried out with the manufacturing layout as claimed in one of the preceding claims 11 to 14.

## Revendications

1. Procédé de fabrication d'un corps par un procédé de fabrication additive à l'aide d'une poudre métallique, ledit procédé comportant les étapes suivantes :
- concevoir du corps par simulation sur ordinateur avec prise en compte d'au moins une zone du corps à traiter et transfert de données vers un dispositif de fabrication additive, un ensemble de données 3D à fabriquer étant divisé en une zone formant enveloppe et une zone formant noyau,
- fournir successivement la poudre métallique pour constituer des couches de poudre disposées les unes sur les autres,
- faire durcir successivement des parties des couches de poudre pour obtenir au moins une structure spécifiée dans les couches de poudre disposées les unes sur les autres, la structure étant au moins partiellement remplie de poudre métallique des couches de poudre, et
- calibrer un corps créé au moyen de la structure dans la zone à traiter, d'autres zones extérieures du corps étant laissées non traitées ;
le procédé de fabrication additive permettant de conférer depuis le noyau différentes propriétés mécaniques dans la zone de bord qui est ensuite retravaillée lors de la calibration, ce changement de propriétés mécaniques incluant une densité plus faible dans la zone de bord.

2. Procédé selon la revendication 1, **caractérisé en ce que** la poudre est compactée plusieurs fois au cours du procédé de fabrication additive.

3. Procédé selon la revendication 1 ou 2, **caractérisé en ce que** la poudre de couches de poudre individuelles est compactée mécaniquement.

4. Procédé selon l'une des revendications précédentes, **caractérisé en ce que** la poudre est agitée afin de la compacter.

5. Procédé selon l'une des revendications précédentes destiné à fabriquer un corps au moyen d'un procédé de fabrication additive à l'aide d'une poudre métallique, ledit procédé comprenant les étapes suivantes :
- fournir successivement la poudre métallique pour constituer des couches de poudre disposées les unes sur les autres,
- exciter la poudre métallique par vibration,
- faire durcir successivement des parties des couches de poudre pour obtenir au moins une structure spécifiée dans les couches de poudre disposées les unes sur les autres.

6. Procédé selon l'une des revendications précédentes 1 à 5, **caractérisé en ce qu'**une plaque de base d'un système de fabrication du procédé de fabrication additive, une couche de poudre et/ou une partie d'un dispositif d'alimentation en poudre sont excités par vibrations afin d'appliquer la poudre du système de fabrication.

7. Procédé selon l'une des revendications précédentes 1 à 6, **caractérisé en ce que** le durcissement de parties des couches de poudre conduit à une structure fermée dans laquelle la poudre reste contenue.

8. Procédé selon l'une des revendications précédentes 1 à 7, **caractérisé en ce que** le corps reçoit une structure de paroi qui présente une porosité plus faible dans une zone intérieure de la structure de paroi par rapport à une zone extérieure de la structure de paroi.

9. Procédé selon l'une des revendications précédentes 1 à 8, **caractérisé en ce que**, dans une zone de la structure de paroi, un paramètre de poudre et/ou une propriété de matériau sont réglés différemment par rapport à l'intérieur de la structure de paroi pour une poudre par ailleurs identique.

10. Procédé selon l'une des revendications précédentes 1 à 9, **caractérisé en ce que** le frittage de l'au moins une structure et de la poudre provenant des couches de poudre, qui est retenue dans la structure lors du frittage, est effectué dans un four de frittage pour former le corps, la poudre restée dans la structure près de la zone du corps à traiter étant chauffée pendant le frittage à une température à laquelle des cols de frittage se forment sur des grains de la poudre qui soutiennent la zone du corps à traiter.

11. Système de fabrication, comportant au moins un dispositif de fabrication additive à lit fluidisé pourvu d'un dispositif de calibration et un ordinateur sur lequel peut être exécuté un produit de programme informatique permettant de mettre en oeuvre un procédé selon l'une des revendications 1 à 10 au moyen du système de fabrication.

12. Système de fabrication selon la revendication 11, **caractérisé en ce qu'**il comporte en outre un four de frittage.

13. Système de fabrication selon la revendication 12, **caractérisé en ce que** le four de frittage est un four continu qui fait partie d'une chaîne de production dans laquelle, parallèlement au corps fabriqué selon un procédé de fabrication additive, défilent des corps fabriqués différemment et des corps à fritter.

14. Système de fabrication selon l'une des revendications précédentes, **caractérisé en ce qu'**un module de vibration est disposé sur une plaque de base d'un système de fabrication du procédé de fabrication additive et/ou sur une partie d'un dispositif du système de fabrication destiné à l'alimentation en poudre afin d'appliquer la poudre.

15. Corps métallique fabriqué par un procédé de fabrication additive selon l'une des revendications précédentes 1 à 10, ledit corps métallique comportant une structure extérieure et un noyau qui sont chacun en un matériau métallique, la structure extérieure étant calibrée dans une sous-zone qui est supportée par le noyau, le noyau comportant un matériau métallique qui comporte des cols frittés au moins dans une zone de support de la sous-zone de la structure, la structure extérieure ayant une densité supérieure à celle du noyau.

16. Corps métallique, fabriqué au moyen d'un procédé de fabrication additive selon l'une des revendications précédentes 1 à 10, ledit corps métallique comportant une structure creuse en matériau métallique fabriquée de manière additive, la structure creuse ayant une densité d'au moins environ 100 % le long d'une zone intérieure d'une section de paroi transversale de la structure creuse, tandis qu'une zone extérieure de cette section de paroi transversale a une densité qui est inférieure à celle de la zone intérieure.

17. Corps métallique selon la revendication 16, **caractérisé en ce que** la zone extérieure de la structure creuse est calibrée dans une sous-zone.

18. Corps métallique selon la revendication 15, 16 ou 17, **caractérisé en ce que**, immédiatement après la construction à partir d'un dispositif de fabrication additive à lit de poudre, une surface supérieure et/ou inférieure a une valeur de rugosité Sa selon la norme EN ISO 25178 inférieure à celle d'une surface latérale du corps métallique et/ou un écart de tolérance d'une dimension dans le sens du bas vers le haut du corps métallique inférieur à un écart de tolérance d'une dimension dans le sens d'une largeur du corps métallique.

19. Produit de programme informatique destiné à être exécuté sur un ordinateur, ledit produit de programme informatique comportant un procédé de calcul destiné à construire un corps, les procédés selon l'une des revendications précédentes 1 à 10 étant mis en oeuvre au moyen du produit de programme informatique et au moyen du système de fabrication selon l'une des revendications précédentes 11 à 14.
